# EUROPEAN PATENT SPECIFICATION

(11) **EP 0 513 660 B1**
(45) Date of publication and mention of the grant of the patent: **20.09.1995**
(21) Application number: 92107700.4
(22) Date of filing: 07.05.1992
(51) Int. Cl.: B41J 2/335

(54) **Thermal printing head**
Wärmedruckkopf
Tête d'impression thermique

(30) Priority: 15.05.1991 JP 110429/91
(43) Date of publication of application: 19.11.1992
(73) Proprietor: ROHM CO., LTD., Kyoto (JP)
(72) Inventor: Taniguchi, Hideo, c/o Rohm Co., Ltd., Ukyo-ku, Kyoto (JP); Ota, Shigeo, c/o Rohm Co., Ltd., Ukyo-ku, Kyoto (JP); Tagashira, Fumiaki, c/o Rohm Co., Ltd., Ukyo-ku, Kyoto (JP); Ooyama, Shingo, c/o Rohm Co., Ltd., Ukyo-ku, Kyoto (JP)
(74) Representative: Reinhard - Skuhra - Weise & Partner

(56) References cited:
- GB-A- 2 184 695
- US-A- 4 506 272

## Description

The present invention relates to a thermal printing head which is typically incorporated in a facsimile machine for example.

As is well known, a typical thermal printing head comprises a ceramic head board, a heating resistor line formed on the head board along one longitudinal edge thereof, and an array of drive IC's carried on the head board for divisionally actuating the heating resistor line. The drive IC's are made to receive control signals through a wiring conductor pattern which is also formed on the head board. Further, the head board also carries a common electrode and individual electrodes in conduction with the heating resistor line.

In such a thermal printing head, the individual electrodes are formed very densely in a sophisticated pattern particularly due to recent tendency of improving printing resolution (increasing the number of heating dots in a unit length). However, if the surface flatness is not strictly realized, it is difficult to form a sophisticated electrode pattern by etching. Thus, for improving the surface flatness, one surface of the head board is entirely formed with a thin glaze layer, and the sophisticated pattern of individual electrodes is formed on this glaze layer. Indeed, the provision of the glaze layer is also preferred for improving the printing quality of the thermal printing head.

As described above, the typical thermal head must carry the drive IC's and the wiring conductor pattern therefor, so that the width of the head board must be large enough to carry these components in addition to the heating resistor line and the two kinds of electrodes. Thus, when the glaze layer is formed entirely on one surface of the head board which is relatively wide, the production cost of the thermal printing head inevitably increases because of the time-taking process and material cost for forming the glaze layer. Indeed, the drive IC's and the wiring conductor pattern themselves do not require any glaze layer.

In view of the above problem, the Japanese Patent Application Laid-open No. 62-238761 discloses a thermal printing head which comprises three different boards or substrates. For more conveniently describing this prior art arrangement, reference is now made to Fig. 4 of the accomapnying drawings.

As shown in Fig. 4, the prior art thermal printing head comprises a ceramic base board 7 on which a ceramic head board 1 and a ceramic circuit board 2 are fixed in parallel to each other. Of these three ceramic boards, the head board 1 alone is formed with a thin glaze layer 3 which, in turn, is formed with a heating resistor line 4 together with its associated common electrode and individual electrodes (unnumbered). On the other hand, the circuit board 2 is made to directly carry an array of drive IC's 5 and a wiring conductor pattern 6, and the drive IC's 6 are electrically connected to the wiring conductor pattern 6 and the individual electrodes through metallic wires 8.

According to the prior art arrangement of Fig. 4, the size of the head board 1 can be greatly reduced because the drive IC's 5 and the wiring conductor pattern 6 are carried by the separate circuit board 2. Thus, the area for forming the glaze layer 3 is correspondingly reduced, consequently avoiding the problems attendent with the glaze layer 3.

However, the use of the separate circuit board 2 increases the total number of required components, and the circuit board 2 need be mounted to the base board 7 separately from the head board 1. Thus, the reduction in the manufacturing cost is still insufficient. Further, the prior art arrangement is also disadvantageous in that the need for the circuit board 2 increases the overall size and weight of the thermal printing head.

It is, therefore, an object of the present invention to provided a thermal printing head which is capable of eliminating the problems described above.

According to the present invention, there is provided a thermal printing head comprising: a ceramic base board; and a head board fixed on the base board, the head board being formed with a glaze layer which carries a heating resistor, the glaze layer being formed with a common electrode and individual electrodes in conduction with the heating resistor; characterized in that: the base board directly carries drive IC's for actuating the heating resistor; that a wiring conductor pattern is directly formed on the base board for connection to the drive IC's.

With the arrangement described above, the base board directly carries the drive IC's and the wiring conductor pattern in addition to supporting the head board. Thus, there is no need to provide a separate circuit board for carrying the drive IC's and the wiring conductor pattern, thereby significantly reducing the production cost while also realizing size and weight reduction of the thermal printing head.

Preferably, the common electrode is formed to also cover an edge face of the head board which extends parallel to the heating resistor adjacent thereto. Further advantageously, the common electrode is made to have at least one leg extending between the head board and the base board to a position beyond the head board and close to the wiring conductor pattern. Such a configuration is effective for further reducing the size of the thermal head.

Other objects, features and advantages of the present invention will be fully understood from the following detailed description given with reference to the accompanying drawings, in which:
Fig. 1 is a perspective view showing a thermal printing head according to the present invention;
Fig. 2 is an enlarged sectional view taken along the line II-II in Fig. 1;
Fig. 3 is a perspective view showing another thermal printing head according to the present invention; and
Fig. 4 is a a transverse sectional view showing a prior art thermal printing head.

The present invention is now described in more detail by referring to the accompanying drawings.

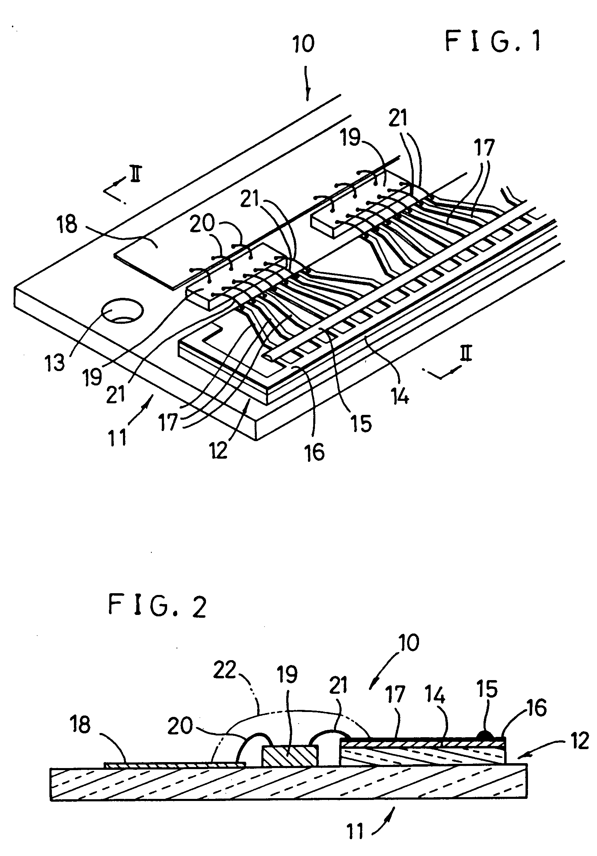

Referring first to Figs. 1 and 2, a thermal printing head 10 is shown to comprise a ceramic base board 11 and a ceramic head board 12. The head board 12 is bonded to the upper surface of the base board 11 by using cement or low-melting-point glass for example. Each end of the base board 11 is provided with a mounting hole for fixation, by a screw or bolt, to an appropriate apparatus such as a facsimile machine (not shown).

The upper surface of the head board 12 is formed with a thin glaze layer 14. On the other hand, the upper surface of the glaze layer 14 is formed a heating resistor line 15 extending along a longitudinal edge of the head board 12 adjacent thereto. The upper surface of the glaze layer is also formed with a common electrode 16 and individual electrodes 17 in conduction with the heating resistor line 15.

According to the present invention, the upper surface of the base board 11 directly carries drive IC's 19 in an array extending parallel to the head board 12 adjacent thereto. Further, the upper surface of the base board 11 is formed a wiring conductor pattern 18 (details not shown) for connecting the drive IC's to input terminals (not shown). The drive IC's 19 are electrically connected to the wiring conductor pattern 18 and the individual electrodes 17 through raised metallic wires 20, 21. For protection, the array of drive IC's 19 together with the respective wires 20, 21 are entirely enclosed in a resinous package 22, as shown in Fig. 2.

With the arrangement described above, the upper surface of the base board 11 directly carries the drive IC's 19 and the wiring conductor pattern 18 in addition to supporting the head board 12. Thus, unlike the prior art arrangement of Fig. 4, there is no need to provide a separate circuit board.

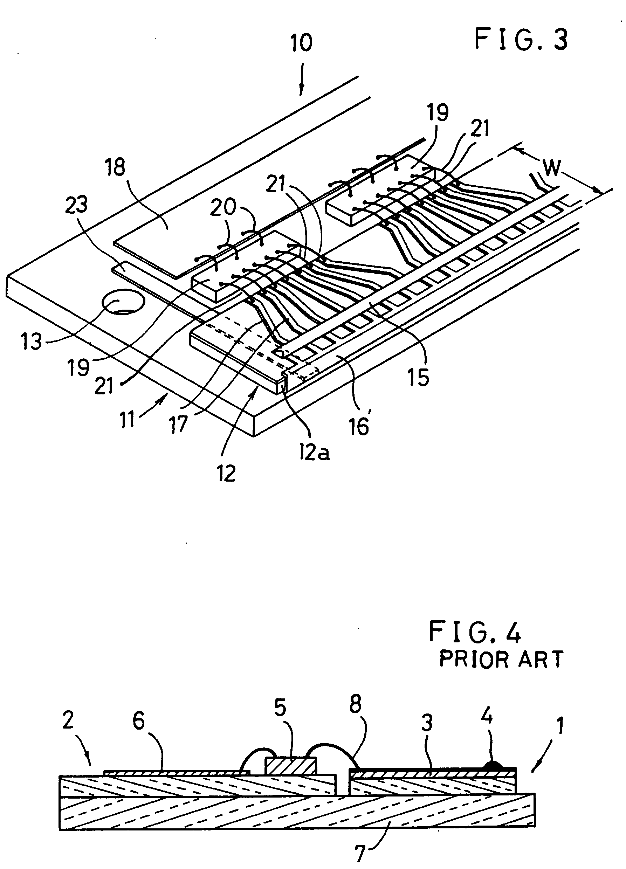

Fig. 3 shows another thermal printing head according to the present invention. The thermal printing head 10 of this embodiment differs from that of the foregoing embodiment only in the following points.

Specifically, the upper surface of the glaze layer is formed with a common electrode 16' which also covers a longitudinal edge face 12a of the head board 12 which extends parallel to the heating resistor line 15 adjacent thereto. Further, each end of the common electrode 16' has a leg 23 extending between the head board 12 and the base board 11 to a position beyond the head board and close to the wiring conductor pattern 18.

According to the arrangement of Fig. 3, the longitudinal edge face 12a of the head board 12 is utilized for forming part of the common electrode 16. Thus, the width W of the head board 12 can be reduced by an amount corresponding to the thickness of the head board 12, thereby enabling size reduction of the thermal head.

The present invention being thus described, it is obvious that the same may be varied in many other ways. For instance, instead of using the metallic wires 20, 21, the drive IC's 19 may be electrically connected to the wiring conductor pattern 18 and the individual electrodes 17 by using a flexible flat cable (FFC) or a electrical connection tape (tape automated bonding).

A thermal printing head comprises a ceramic base board (11) and a head board (12) fixed on the base board. The head board is formed with a glaze layer (14) which carries a heating resistor (15), and the glaze layer is further formed with a common electrode (16) and individual electrodes (17) in conduction with the heating resistor. The base board directly carries drive IC's (19) for actuating the heating resistor, and a wiring conductor pattern (18) is directly formed on the base board for connection to the drive IC's. Thus, there is no need to provide a separate circuit board.

## Claims

1. A thermal printing head comprising: a ceramic base board (11); and a head board (12) fixed on the base board, the head board being formed with a glaze layer (14) which carries a heating resistor (15) the glaze layer being formed with a common electrode (16, 16') and individual electrodes (17) in conduction with the heating resistor; characterized in that:
the base board (11) directly carries drive IC's (19) for actuating the heating resistor (15); and
a wiring conductor pattern (18) is directly formed on the base board for connection to the drive IC's.

2. The thermal printing head according to claim 1, wherein the common electrode (16') is formed to cover an edge face (12a) of the head board (12) which extends parallel to the heating resistor (15) adjacent thereto.

3. The thermal printing head according to claim 2, wherein the common electrode (16') has at least one leg (23) extending between the head board (12) and the base board (11) to a position beyond the head board and close to the wiring conductor pattern (18).

## Patentansprüche

1. Thermodruckkopf mit: einer keramischen Grundplatte (11); und einer Kopfplatte (12), welche auf der Grundplatte befestigt ist, wobei die Kopfplatte mit einer Glasurschicht (14) versehen ist, die einen Heizwiderstand (15) trägt, die Glasurschicht mit einer gemeinsamen Elektrode (16, 16') und individuellen Elektroden (17) gebildet ist, welche leitend mit dem Heizwiderstand verbunden sind;
dadurch gekennzeichnet, daß:
die Grundplatte (11) direkt Treiber-ICs (19) zum Betreiben des Heizwiderstands (15) trägt; und
eine Verdrahtungsleiterstruktur (18) direkt auf der Grundplatte zum Anschluß an die Treiber-ICs gebildet ist.

2. Thermodruckkopf nach Anspruch 1, bei dem
die gemeinsame Elektrode (16') derart geformt ist, daß sie eine Randfläche (12a) der Kopfplatte (12) überzieht bzw. abdeckt, welche sich parallel zu einem Heizwiderstand (15) neben diesem erstreckt.

3. Thermodruckkopf nach Anspruch 2, bei dem
die gemeinsame Elektrode (16') wenigstens einen Schenkel (23) besitzt, welcher sich zwischen der Kopfplatte (12) und der Grundplatte (11) zu einer Stelle hin erstreckt, welche hinter der Kopfplatte und nahe zu der Verdrahtungsleiterstruktur (18) liegt.

## Revendications

1. Tête d'impression thermique comprenant une plaquette de base (11) en céramique et une plaquette de tête (12) fixée sur la plaquette de base, la plaquette de tête étant pourvue d'une couche de vernis (14) qui porte une résistance de chauffage (15), la couche de vernis étant pourvue d'une électrode commune (16, 16') et d'électrodes individuelles (17) reliées d'une manière conductrice à la résistance de chauffage,
caractérisée en ce que :
la plaquette de base (11) porte directement des circuits intégrés de commande (19) servant à faire fonctionner la résistance de chauffage (15) et
un motif conducteur de câblage (18) est directement formé sur la plaquette de base en vue d'être relié aux circuits intégrés de commande.

2. Tête d'impression thermique selon la revendication 1, dans laquelle l'électrode commune (16) est formée de façon à couvrir une face marginale (12a) de la plaquette de tête (12) qui est orientée parallèlement à la résistance de chauffage (15), d'une façon adjacente à cette dernière.

3. Tête d'impression thermique selon la revendication 2, dans laquelle l'électrode commune (16') comporte au moins une branche (23) qui s'étend, entre la plaquette de tête (12) et la plaquette de base (11), jusqu'à une position située au-delà de la plaquette de tête et au voisinage du motif conducteur de câblage (18).
